Europäisches Patentamt

European Patent Office

Office européen des brevets

(11) Veröffentlichungsnummer : **0 437 607 B1**

(12) # EUROPÄISCHE PATENTSCHRIFT

(45) Veröffentlichungstag der Patentschrift :
**15.11.95 Patentblatt 95/46**

(51) Int. Cl.$^6$ : **G02C 7/06**, G02C 7/02

(21) Anmeldenummer : **90917920.2**

(22) Anmeldetag : **17.07.90**

(86) Internationale Anmeldenummer :
**PCT/DE90/00535**

(87) Internationale Veröffentlichungsnummer :
**WO 91/01508 07.02.91 Gazette 91/04**

(54) **PROGRESSIVES BRILLENGLAS MIT POSITIVER FERNTEIL-WIRKUNG.**

(30) Priorität : **17.07.89 DE 3923576**

(43) Veröffentlichungstag der Anmeldung :
**24.07.91 Patentblatt 91/30**

(45) Bekanntmachung des Hinweises auf die
Patenterteilung :
**15.11.95 Patentblatt 95/46**

(84) Benannte Vertragsstaaten :
**AT BE CH DE DK ES FR GB IT LI LU NL SE**

(56) Entgegenhaltungen :
**EP-A- 0 291 094**
**DE-B- 1 145 820**
**GB-A- 2 019 030**

(73) Patentinhaber : **Optische Werke G.
Rodenstock
Isartalstrasse 43
D-80469 München (DE)**

(72) Erfinder : **BARTH, Rudolf
Weichserstr. 21 A
D-8061 Vierkirchen-Pasenbach (DE)**
Erfinder : **WEHMEYER, Klaus
Mösiweg 8
D-8065 Erdweg-Guggenberg (DE)**

(74) Vertreter : **Münich, Wilhelm, Dr.
Kanzlei Münich, Steinmann, Schiller
Wilhelm-Mayr-Str. 11
D-80689 München (DE)**

EP 0 437 607 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

## Technisches Gebiet

Die Erfindung bezieht sich auf ein progressives Brillen-glas mit positiver Fernteil-Wirkung, bei dem wenigstens eine Fläche progressiv ausgebildet ist, wobei die Fläche einen zum Sehen in die Ferne bestimmten Fernteil mit annähernd konstanter Fernteil-Wirkung und einen zum Sehen in die Nähe bestimmten Nahteil mit annähernd konstanter Nahteil-Wirkung sowie eine Progressionszone aufweist, in der der Flächen-Brechwert von dem im Fernbezugspunkt vorliegenden Flächen-Brechwert längs eines gewundenen oder ebenen Hauptmeridians auf den im Nahbezugspunkt vorliegenden Flächen-Brechwert ansteigt.

## Stand der Technik

Ein derartiges Brillenglas ist beispielsweise aus der DE 37 16 201 A1 bzw. der EP-A-0 291 094 bekannt. Auf diese Druckschriften sowie auf die in diesen Druckschriften genannte weitere Literatur wird im übrigen zur Erläuterung aller hier nicht näher beschriebenen Begriffe ausdrücklich verwiesen.

Bei der Entwicklung progressiver Brillengläser sind zunächst zwei unterschiedliche Konstruktionsprinzipien verfolgt worden:

Bei dem einen Konstruktionsprinzip wird die Progressions-zone, d.h. der Bereich, in dem die Wirkung des Brillenglases bzw. bei Betrachtung lediglich der progressiven Fläche der Flächenbrechwert dieser Fläche von den Wert im Fernteil auf den Wert im Nahteil ansteigt, möglichst lang gewählt, um einen vergleichsweise geringen Progressionsanstieg zu erhalten, der die Bildfehlerkorrektur in den seitlichen Bereichen erleichtert.

Für dieses Konstruktionsprinzip typische Flächen sind in der DE-PS 1 145 820 sowie in den Figuren 1 bis 4 der US-PS 2 878 721 beschrieben.

Bei dem anderen Konstruktionsprinzip wird von einen sphärischen Fernteil und einen sphärischen Nahteil ausgegangen und versucht, diese möglichst Bildfehler-frei durch eine Übergangszone zu "verbinden".

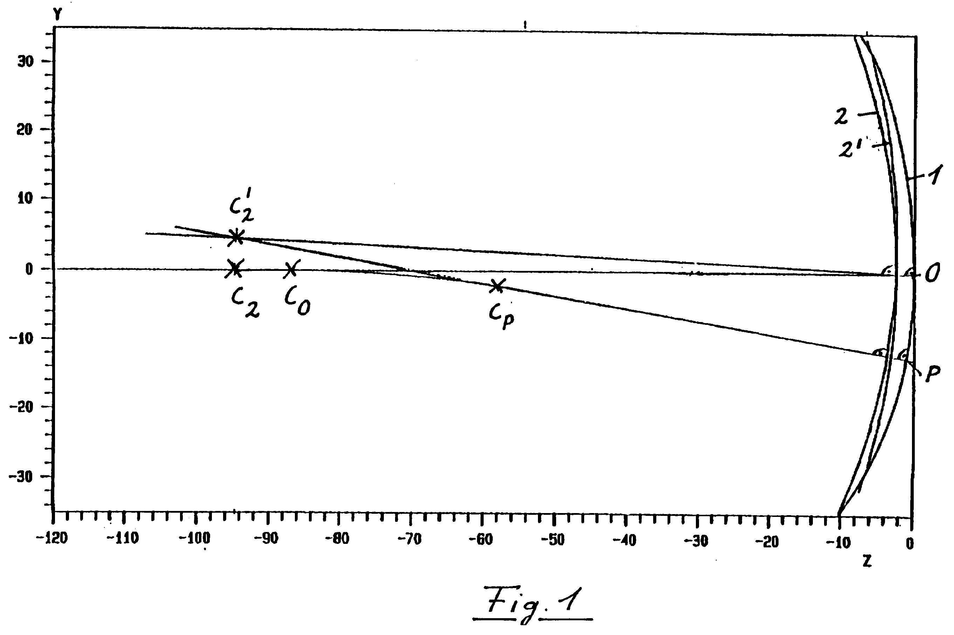

In der Folge ist versucht worden, durch die Wahl asphärischer Fern- und Nahteile die Vorteile beider Konstruktionsprinzipien unter möglichst weitgehender Vermeidung der Nachteile dieser Prinzipien zu vereinen, wobei besondere Beachtung dem Verlauf des Progressionsanstiegs geschenkt wurde: Hierzu wird beispielsweise auf Fig. 1 des Übersichtsartikels von B. Maitenaz in "The ophthalmic optician", 17. Sept. 1966, verwiesen.

Seit ca. 8 Jahren hat sich als gemeinsames Konstruktions-prinzip sowohl der auf dem Markt erhältlichen als auch der in der Patentliteratur vorgeschlagenen progressiven Brillengläser mit einer progressiven Fläche herauskristallisiert, daß der möglichst große Fernteil einen weitgehend konstanten Flächenbrechwert und zumindest auf dem Hauptmeridian bzw. im zentralen Durchblickbereich einen möglichst geringen Flächenastignatismus aufweist. Auch der Nahteil hat bei den bekannten progressiven Brillengläsern einen weitgehend konstanten Flächenbrechwert und im Bereich des Hauptmeridians einen möglichst geringen Flächenastigmatismus.

Dabei wird unter "weitgehend konstantem Flächenbrechwert" und "möglichst geringer Flächenastigmatismus" verstanden, daß bei den bekannten progressiven Brillengläsern der Flächenbrechwert im Fernteil um nicht mehr als ± 0,3 bis 0,5 dpt schwankt und der Flächenastigmatismus auf dem Hauptmeridian im Bereich der Progressionszone und im unteren Bereich des Fernteils kleiner als typischerweise 0,25 dpt ist. Ahnliche Werte gelten auch für den Nahteil, wobei konstruktionsbedingt bei den meisten Brillengläsern die vorstehend angegebenen Grenzen geringfügig höher sein können.

Die Länge der Progressionszone, d.h. die Länge des Bereichs, in dem der Flächenbrechwert auf dem Hauptmeridian ansteigt, ist in der Regel von der jeweils vertretenen Firmenphilosophie abhängig, übersteigt aber bei keinem derzeit erhältlichen Brillenglas Werte von 28 mm.

Ein typischer Verlauf des Flächenbrechwert-Anstiegs für verschiedene Additionswerte ist in Fig. 6 der US-PS 4 315 673 wiedergegeben. Dabei verläuft der Krümmungsradius längs des Hauptmeridians bei Astigmatismus-freien Hauptmeridianen (Nabellinie) proportional zu den Verlauf in Fig. 6 der US-PS 4 315 673, bei Hauptmeridianen, auf denen ein geringer Flächenastigmatismus vorhanden ist, weicht der Verlauf des Krümmungsradius geringfügig von dem dargestellten Verlauf des Flächenbrechwerts ab, ohne daß sich jedoch grundlegende Anderungen ergeben würden.

Unabhängig davon, welches Konstruktionsprinzip verwendet wird, ist bereits in den Anfängen der Progressivglas-Entwicklung erkannt worden, daß es in bestimmten Fällen erforderlich ist, den insbesondere im oberen Bereich des Fernteils und im unteren Bereich des Nahteils auftretenden Astigmatismus schiefer Bündel durch einen entsprechenden Flächenastignatismus mit entgegengesetztem Vorzeichen zu kompensieren. Hierzu wird auf Spalte 5, Zeile 61 bis 66 der eingangs genannten DE-PS 1 145 820 verwiesen. Auch die in den Figuren 1 bis 4 der US-PS 2 878 721 dargestellte progressive Fläche weist auf dem Hauptmeridian im oberen Bereich des Fernteils und im unteren Bereich des Nahteils einen Flächenastigmatismus zur Kompensation des Astigmatismus schiefer Bündel auf, wobei ansonsten auf dem Hauptmeridian praktisch kein Flächenastigmatismus vorhanden ist (der Flächenastigmatismus auf den restlichen Teil des Hauptmeridians ist kleiner als 0,1 dpt).

Auch die in der EP 0 027 339 A3 beschrieben progressive Fläche weist im unteren Bereich des Nahteils einen Flächenastigmatismus auf, der offensichtlich ebenfalls der Kompensation des Astigmatismus schiefer Bündel dienen soll.

Ein ähnlicher Vorschlag ist auch in der DE 33 35 109 A1 bzw. der dieser Druckschrift entsprechenden US-PS 4 640 593 enthalten.

Bei der Berechnung progressiver Brillengläser ist in der Vergangenheit im allgemeinen so vorgegangen worden, daß zunächst der Verlauf des Hauptmeridians vorgegeben und von diesem Hauptmeridian ausgehend beispielsweise mit Kegelschnitten (DE-PS 20 44 639), periodischen Funktionen (DE-OS 28 15 936 bzw. US-PS 4 315 673) oder mittels Spline-Funktionen (DE-PS 30 16 935 oder "Optik-Konstruktion mit Splines" in OPTIK, Bd. 70, 1985, S.19-28) die progressive Fläche aufgebaut worden ist.

Gleichgültig, ob bei der Optimierung lediglich der Flächenastigmatismus oder auch zusätzlich der Astigmatismus schiefer Bündel betrachtet worden ist, haben sich damit inner Flächen ergeben, deren Flächeneigenschaften weitgehend gleich gewesen sind.

Insbesondere ist den aus der US-PS 2 878 721, der EP 0 027 339 A3 und der DE 33 35 109 A1 bekannten Flächen gemeinsam, daß im Fernteil und im Nahteil der sogenannte sagittale Krümmungsradius, also der Krümmungsradius der Fläche senkrecht zum Hauptmeridian praktisch konstant ist, so daß sich lediglich der Krümmungsradius in Richtung des Hauptmeridians, also der sog. tangentiale Krümmungsradius andert.

Erfindungsgemäß ist nun erkannt worden, daß unabhängig vom Detailaufbau der Flächen und unabhängig vom verwendeten Formalismus zur Flächenberechnung die bekannten progressiven Flächen in Gebrauchsstellung, d.h. bei Berücksichtigung des Astigmatismus schiefer Bündel keine vollständig befriedigenden Ergebnisse liefern.

## Darstellung der Erfindung

Der Erfindung liegt die Aufgabe zugrunde, ein progressives Brillenglas anzugeben, das in Gebrauchsstellung gegenüber bekannten Brillengläsern verbesserte Eigenschaften aufweist.

Eine erfindungsgemäße Lösung dieser Aufgabe ist im Patentanspruch 1 angegeben. Weiterbildungen der Erfindung sind in den Unteranspruchen gekennzeichnet.

Die Erfindung geht von folgender Erkenntnis aus:

Versieht man ein progressives Brillenglas mit einer zweiten Fläche derart, daß die optische Achse die Vorderfläche in der geometrischen Mitte des roh-runden Brillenglases durchstößt, so ist die Randdicke im Fernteil größer als im Nahteil. Deshalb werden progressive Brillengläser zumeist mit einem vertikalen Prisma mit untenliegender Basis und einer Größe von ca. 0,25 cm/m bis ca. 3,00 cm/m versehen, so daß die Randdicke des Glases "nivelliert" wird. Dies bedeutet aber auch, daß die optische Achse die Vorderfläche unterhalb der geometrischen Mitte durchstößt.

Dies hat zur Folge, daß der Astigmatismus schiefer Bündel im Fernteil wesentlich durch den Abstand des Durchstoßpunktes des Sehstrahles von der optischen Achse anhängt, während im Nahteil, in dem oder nahe dem die optische Achse die Vorderfläche durchstößt, der Astigmatismus schiefer Bündel im wesentlichen von der um die Addition gegenüber der Fernteilwirkung erhöhten Wirkung beeinflußt wird.

Deshalb ist es - wie weiterhin erfindungsgemäß erkannt worden ist - nicht möglich, den Fern- und Nahteil hinsichtlich des Astigmatismus schiefer Bündel mit den Korrektionsmaßnahmen zu korrigieren, wie sie in der DE 33 35 109 A1 bzw. der dieser Druckschrift entsprechenden US-PS 4 640 593 vorgeschlagen worden sind. Auch ist es aus den vorgenannten Gründen nicht sinnvoll, lediglich im Nahteil eine Kompensation des Astigmatismus schiefer Bundel vorzusehen, wie dies in der EP 0 027 339 angeregt wird.

Erfindungsgemäß wird deshalb zur Korrektur des Astigmatismus schiefer Bündel wie folgt vorgegangen:

Im Fernteil wird der tangentiale Krümmungsradius, d.h. der Krümmungsradius in Richtung des Hauptmeridians mit zunehmendem Abstand vom Fernbezugspunkt größer. Der sagittale Krümmungsradius, d. h. der Krümmungsradius senkrecht zum Hauptmeridian für Punkte auf dem Hauptmeridian ist dagegen bevorzugt zumindest annähernd konstant (Anspruch 3). Ferner ist es gemäß Anspruch 4 bevorzugt, wenn sich der Krümmungsradius in Richtung des Hauptmeridians auf dem Hauptmeridian annähernd linear als Funktion des Abstandes vom Fernbezugspunkt ändert.

Im Nahteil ist dagegen der sagittale Krümmungsradius nicht konstant. Vielmehr wird der sagittale Krümmungsradius als Funktion des Abstandes vom Nahbezugspunkt auf dem Hauptmeridian annähernd linear kleiner. Dagegen ist der Krümmungsradius in Richtung des Hauptmeridians auf dem Hauptmeridian im Nahteil entweder annähernd konstant oder nimmt zu.

Anders ausgedrückt gelten für die einzelnen Radien folgende Beziehungen, wenn die progressive Fläche die Vorderfläche ist:

$$R_{HM} (y_{BN} - 15 < y < y_{BN}) \cong R_{HM} (y = y_{BN})$$
$$R_{sag}(y < y_{BN}) < R_{sag}(y = y_{BN}) < R_{HM} (y = y_{BN})$$
$$|dR_{sag}/dl| \approx const > 0 \text{ für } y < y_{BN}$$

die augenseitige Fläche ist:

$$R_{HM} (y_{BN} - 15 < y < y_{BN}) \cong R_{HM} (y = y_{BN})$$
$$R_{sag}(y < y_{BN}) > R_{sag}(y = y_{BN}) > R_{HM} (y = y_{BN})$$
$$|dR_{sag}/dl| \approx const > 0 \text{ für } y < y_{BN}$$

Hierbei bedeuten:

| | |
|---|---|
| $R_{sag}$ | der sagittale Krümmungsradius, |
| $R_{HM}$ | der tangentiale Krümmungsradius, |
| $|dR_{sag}/dl|$ | die Änderung des sagittalen Krümmungsradius in Punkten auf dem Hauptmeridian und |
| $Y_{BN}$ | die y-Koordinate des Nahbezugspunktes. |

Oberhalb des Fernbezugspunktes wird zwar der Krümmungsradius längs des Hauptmeridians größer, so daß der Flächenbrechwert abnimmt (die Flächenbrechwertabnahme ist nicht unbedingt proportional zu der Zunahme des Krümmungsradius längs des Hauptmeridian, da insbesondere bei der Ausgestaltung gemäß Anspruch 8 der Flächenastigmatismus zunimmt), die Gesamtwirkung im Fernteil bleibt jedoch in Gebrauchsstellung, d. h. für ein vor dem Auge befindliches progressives Brillenglas, annähernd konstant.

Darüberhinaus kompensiert der längs des Hauptmeridians vorhandene Flächenastigmatismus, der gemäß Anspruch 8 im oberen Teil des Fernteils zunimmt, den auftretenden Astigmatismus schiefer Bündel, so daß sich in Gebrauchsstellung ein großer, nahezu astigmatismusfreier Fernteil ergibt.

Dabei wird - wie einleitend bereits erläutert - unter annähernd konstanter Wirkung verstanden, daß die Gesamtwirkung des Brillenglases im Fernteil um nicht mehr als höchstens ± 0,5 dpt variiert. Ebenfalls in Übereinstimmung mit der vorstehenden Erläuterung wird unter weitgehend Astigmatismus-frei verstanden, daß der Gesamtastigmatismus Werte von 0,5 dpt und bevorzugt von 0,25 dpt in einem großen zentralen Bereich mit einen Durchmesser von ca 20 mm um den Fernbezugspunkt nicht überschreitet.

In jedem Falle ist es jedoch bevorzugt, wenn gemäß Anspruch 2 die Zunahme des tangentialen Krümmungsradius im Fernteil längs des Hauptmeridians umso größer ist, je kleiner die Addition ist, während die Abnahme des sagittalen Krümmungsradius im Nahteil der Addition "folgen" kann.

Dies bedeutet, daß folgende Beziehungen erfullt sind:

$$R_{HM} (y_{BF} + 15) - R_{HM} (y_{BF}) = B * (R_{HM} (y_{BF}) - R_{HM} (y_{BN}))$$
$$R_{sag}(y_{BN}) - R_{sag}(y_{BN} - 15) = C * (R_{sag}(y_{BF}) - R_{sag}(y_{BN}))$$

wobei die Faktoren B und C für augenseitige Flächen zwischen ca -1,5 dpt und -3,5 dpt bei der Basiskurve 6 dpt und ca -2,15 dpt und -4,5 dpt bei der Basiskurve 8 dpt in folgenden Bereichen liegen:

| B | C | Addition = $D_N - D_F$ |
|---|---|---|
| 0,8...1,3 | 0,25...0,8 | 0,5...1,0 |
| 0,3...0,8 | 0,25...0,8 | 1,25..2,0 |
| 0,1...0,8 | 0,25...0,8 | 2,25..3,5 |

Der erfindungsgemäße Aufbau eines Progressivglases, bei dem nicht in erster Linie die Flächeneigenschaften, sondern die Eigenschaften in Gebrauchsstellung des Brillenglases unter Berücksichtigung eines Dicken-Ausgleichsprismas betrachtet werden, führt nicht nur längs des Hauptmeridians, sondern auch in den seitlichen Bereichen des Brillenglases zu einen völlig neuartigen Flächenaufbau. Bei den bekannten Brillengläsern wird versucht, durch eine Abnahme des Krümmungsradius von Horizontal- bzw. Orthogonalschnitten im Fernteil und im oberen Bereich der Progressionszone bzw. durch eine Zunahme des Krümmungsradius der entsprechenden Schnitte im unteren Bereich der Progressionszone und des Nahteils den Flachenastigmatismus in die seitlichen Randbereiche abzudrängen. Es ist zwar vorgeschlagen worden, daß sich die Variation des Krümmungsradius in einem gewissen Abstand wieder umkehrt, bei den bekannten progressiven Brillengläsern ist jedoch der vorstehend genannte Radienverlauf zumindest innerhalb eines sich beidseits des Hauptmeridians erstreckenden Streifen realisiert, dessen seitliche Begrenzung einen Abstand von wenigstens 12 bis 14 mm von Hauptmeridian hat.

Bei dem erfindungsgemäßen Brillenglas ist diese Variation der Krümmungsradien der Schnittlinien von horizontalen Ebenen mit der progressiven Fläche im oberen Bereich der Progressionszone und im Fernteil bevorzugt nicht realisiert. Zumindest außerhalb eines höchstens 16 mm breiten Streifens, d. h. bereits bei einem Abstand von 8 mm vom Hauptmeridian wird der Krümmungsradius der Schnittlinien von horizontalen Ebenen mit der progressiven Flächen größer, wenn die progressive Fläche die konvexe Vorderfläche ist, bzw. kleiner, wenn die progressive Fläche die konkave augenseitige Fläche ist (Anspruch 5). Innerhalb dieses 16 mm breiten Streifens kann der Krümmungsradius der Schnittlinien ebenfalls nach diesem Bildungsgesetz variieren, er kann aber auch konstant sein, oder sich wie beim Stand der Technik ändern, d. h. geringfügig kleiner, wenn die progressive Fläche die konvexe Vorderfläche ist, bzw. größer werden, wenn die progressive Fläche die konkave augenseitige Fläche ist.

In jedem Falle ist es aber bevorzugt, wenn gemäß Anspruch 6 zumindest außerhalb eines sich beidseits des Hauptmeridians erstreckenden und höchstens 20 mm breiten Streifens, d.h. bereits bei einem Abstand von 10 mm vom Hauptmeridian die folgende Ungleichung erfüllt ist:

$$R_{sag}(x, y = const) > R_{sag}(x = HM, y = const)$$

hierbei ist $R_{sag}(x,y)$ der Krümmungsradius der Schnittlinien von zum Hauptmeridian vertikalen Ebenen mit der progressiven Fläche.

Bei den erfindungsgemäßen Brillenglas kann - wie bereits ausgeführt - längs des gesamten Hauptmeridians ein Flächenastigmatismus vorhanden sein, der insbesondere im oberen und im unteren Teil des Brillenglases zur Kompensaion des Astigmatismus schiefer Bündel dient. Dabei ist es insbesondere bevorzugt, wenn gemäß Anspruch 7 längs des gesamten Hauptmeridians gilt:

$$R_{HM}(x_{HM}, y_{HM}) \cong R_{sag}(x_{HM}, y_{HM})$$

hierbei ist wiederum

$R_{HM}$      der Krümmungsradius längs des Hauptmeridians im Punkt $x_{HM}$, $y_{HM}$ auf den Hauptmeridian,

$R_{sag}$      der Krümmungsradius einer Schnittlinie der progressiven Fläche mit zum Hauptmeridian vertikalen Ebene m Punkt $x_{HM}$, $y_{HM}$ auf dem Hauptmeridian.

Gemäß Anspruch 10 ist es weiterhin bevorzugt, wenn auf dem gesamten Hauptmeridian der tangentiale Krümmungsradius größer als der sagittale Krümmungsradius ist, also der Hauptmeridian keine Nabellinie ist.

## Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:

Fig. 1      einen Querschnitt durch ein progressives Brillenglas mit einen Dicken-Reduktionsprisma,

Fig. 2      den Verlauf des tangentialen und sagittalen Krümmungsradius längs des Hauptmeridians für ein erstes Ausführungsbeispiel der Erfindung,

Fig. 3      tabellarisch den Verlauf der Krümmungsradien der Schnittlinien der progressiven Fläche mit horizontalen Ebenen für dieses Ausführungsbeispiel,

Fig. 4      tabellarisch den Flächenastigmatismus längs des Hauptmeridians für dieses Ausführungsbeispiel,

Fig. 5      den (Gesamt)Astigmatismus in Gebrauchsstellung für dieses Ausführungsbeispiel, und

Fig. 6 bis 10      den Verlauf der tangentialen und sagittalen Krümmungsradien längs des Hauptmeridians fur weitere Ausfhürungsbeispiele mit abweichenden Additionen und/oder Basiskurven.

## Beschreibung von Ausfürungsbeispielen

Figur 1 zeigt schematisch einen Querschnitt durch ein progressives Brillenglas zur Erläuterung der Wirkung eines Dicken-Reduktionsprismas (auch als Dicken-Ausgleichsprisma bezeichnet). Die progressive Fläche ist ohne Beschränkung der Allgemeinheit die Vorderfläche 1. Im Mittelpunkt O des rohrunden Brillenglases hat die progressive Fläche den Krümmungsmittelpunkt $C_O$, der auf der Achse $y = 0$ des Koordinatensystems y,z liegt. Verwendet man als augenseitige Fläche 2 eine Fläche, deren Krümmungsmittelpunkt $C_2$ ebenfalls auf der Achse $y = 0$ liegt, so schneidet die optische Achse $C_2C_O$ die Vorderfläche 1 zwar im Mittelpunkt des rohrunden Brillenglases, das Brillenglas hat aber im oberen Teil, d. h. im Bereich des Fernteil eine vergleichsweise große Dicke, während im Nahteil die augenseitige Fläche 2 die Vorderfläche 1 "vergleichsweise rasch" schneidet, so daß entweder die Größe des Nahteils begrenzt ist, oder das Brillenglas eine vergleichsweise große Randdicke im Bereich des Fernteils hat.

Verkippt man dagegen die augenseitige Fläche 2' derart, daß ihr Krümmungsmittelpunkt $C_2'$ oberhalb von

y=0 liegt, so wird die Randdicke des Brillenglases über den Umfang des Glases annähernd ausgeglichen. Allerdings schneidet die optische Achse die progressive Fläche 1 nicht mehr im Mittelpunkt des rohrunden Brillenglases sondern unterhalb des Mittelpunktes O im Punkt P. Die optische Achse ist dabei wiederum die Verbindungslinie des Krümmungsmittelpunkts $C_2$, der Fläche 2′ und des Krümmungsmittelpunktes $C_p$ des Punktes P der progressiven Fläche 1. Bei gleicher minimaler Randdicke kann durch das Einführen des Dicken-Reduktionsprismas die Mittendicke verringert werden.

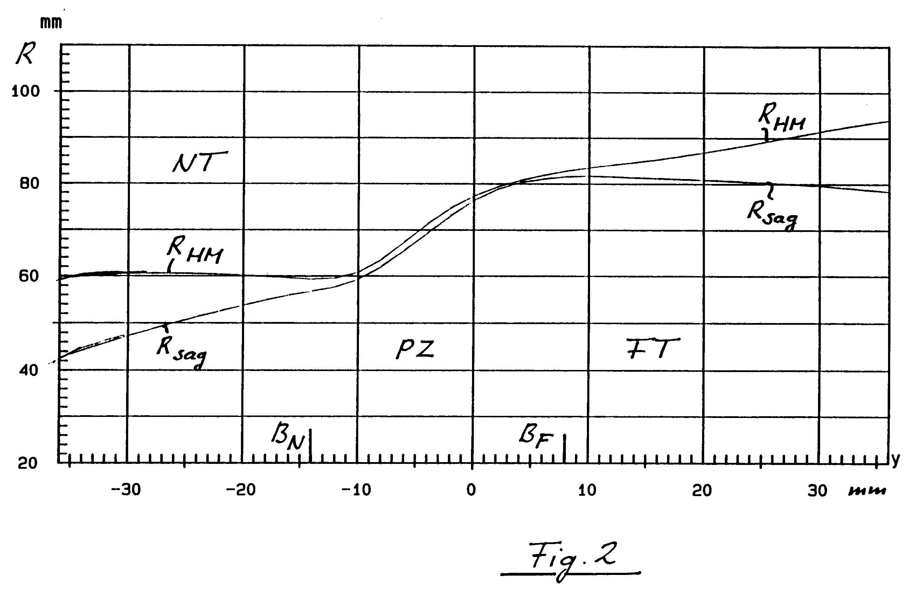

Figur 2 zeigt den Verlauf des tangentialen Krümmungsradius $R_{HM}$ und des sagittalen $R_{sag}$ in mm für ein erstes Ausführungsbeispiel der Erfindung, bei dem der Astigmatismus schiefer Bündel unter Berucksichtigung des Dicken-Ausgleichsprismas kompensiert wird.

Dabei ist ohne Beschränkung des allgemeinen Erfindungsgedankens der Hauptmeridian HM eine ebene Kurve. Die progressive Fläche ist wiederum die konvexe Vorderfläche. Das Koordinatensystem ist so gewählt, daß der Hauptmeridian die Gleichung x = 0 erfüllt. Die y-Achse verläuft bei dem - nicht in Gebrauchsstellung dargestellten - Brillenglas "vertikal", so daß der Krümmungsradius R (in mm) als Funktion der Koordinate y(mm) angegeben ist. Entsprechend verläuft die x-Achse "horizontal".

Ausdrücklich soll jedoch daraufhingewiesen werden, daß sich die Begriffe horizontal und vertikal nicht auf die Gebrauchsstellung des Brillenglases beziehen, in der der Hauptmeridian in bekannter Weise, beispielsweise um 8 Grad gegenüber der Vertikalen verschwenkt sein kann, so daß die Konvergenz der Blickbewegung unterstutzt wird.

Das in Fig. 2 dargestellte Ausführungsbeispiel ist der Hauptmeridian einer progressiven Fläche der sogenannten "Basiskurve 6". Damit ist gemeint, daß mit dieser progressiven Fläche und einen Brechungsindex $n_e$, der ohne Beschränkung des allgemeinen Erfindungsgedankens 1,604 beträgt, mit konkaven augenseitigen Flächen, deren Wirkung zwischen ca. -1,5 und -3,5 dpt liegt, die Fernteil-Wirkungen von +4,0 dpt bis +6,0 dpt "abgedeckt" werden. Die Addition, d.h. die Wirkungszunahme zwischen dem sogenannten Fernbezugspunkt und dem Nahbezugspunkt längs des Hauptmeridians beträgt bei diesem Ausführungsbeispiel 3,0 dpt.

Ferner sind in Figur 2 der nach DIN definierte Fern-Bezugspunkt $B_F$ und der Nahbezugspunkt $B_N$ eingetragen, die bei dem gezeigten Ausführungsbeispiel bei y = 8 mm bzw. y = -14 mm liegen. Zwischen $B_F$ und $B_N$ liegt die Progressionszone PZ, oberhalb von $B_F$ der Fernteil FT und unterhalb von $B_N$ der Nahteil NT.

Figur 2 ist zu entnehmen, daß - wie auch bei herkömmlichen Brillengläsern mit einem sogenannten stabilisierten Fern- und Nahteil - sich sowohl der sagittale als auch der tangentiale Krümmungsradius zwischen $B_F$ und $B_N$ von ca. 82 mm auf etwa 60 mm ändern, so daß sich die gewünschte Addition von 3 dpt ergibt.

Anders als bei herkömmlichen Brillengläsern mit stabilisierten Fern- und Nahteil, aber auch anders als bei bekannten Brillengläsern, die im Fern- und/oder Nahteil einen Flächenastigmatismus zur Kompensation des Astigmatismus schiefer Bündel aufweisen, steigt bei dem erfindungsgemäßen Brillenglas der tangentiale Krümmungsradius oberhalb des Fernbezugspunktes $B_F$ annähernd linear an, und erreicht beispielsweise bei y = 24 mm einen Wert von 88,7 mm und bei y = 32 mm einen Wert von 92,4 mm.

Der sagittale Krümmungsradius $R_{sag}$ ist dagegen oberhalb des Fernbezugspunktes $B_F$ annähernd konstant bzw. nimmt geringfügig ab.

Unterhalb des Nahbezugspunktes $B_N$ ändern sich der tangentiale und der sagittale Krümmungsradius genau umgekehrt wie im Fernteil:

Im Nahteil ist der tangentiale Krümmungsradius $R_{HM}$ annähernd konstant und erreicht beispielsweise bei y = -20 mm einen Wert von 60,2 mm, d. h. er ändert sich insgesamt nur um etwa 1 mm.

Der sagittale Krümmungsradius nimmt dagegen auch unterhalb des Nahbezugspunktes $B_N$ annähernd linear ab und erreicht bei y = -30 mm einen Wert von ca. 47 mm.

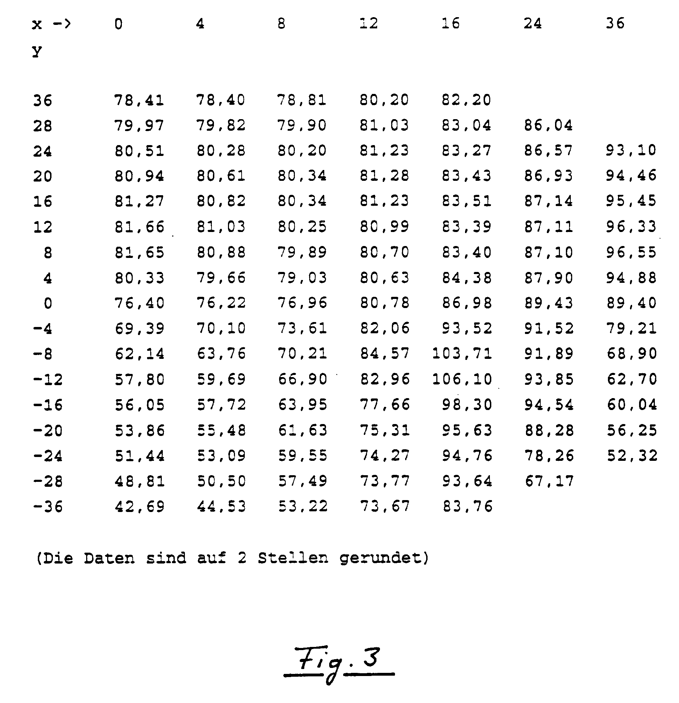

Figur 3 zeigt tabellarisch den Verlauf der Krümmungsradien der Schnittlinien der progressiven Fläche mit horizontalen Ebenen y=const.Da bei dem gezeigten Ausführungsbeispiel die progressive Fläche - ohne Beschränkung des allgemeinen Erfindungsgedankens - symmetrisch ist, sind lediglich die Werte für x≧0 angegeben. Selbstverständlich ist die Erfindung aber auch bei unsymmetrischen Flächen, die beispielsweise in Gebrauchsstellung, d.h. bei verschwenktem Hauptmeridian horizontalsymmetrisch sind, anwendbar.

Wie man der Tabelle entnehmen kann, variiert der Krümmungsradius der Schnittlinien im Nahteil NT und im unteren Bereich der Progressionszone PZ ähnlich wie bei dem aus der DE 37 16 201 A1 bekannten progressiven Brillenglas. Im oberen Bereich der Progressionszone PZ und im Fernteil FT weicht der Verlauf der Krümmungsradien der Schnittlinien der progressiven Fläche mit horizontalen Ebenen x=const. jedoch völlig von dem Verlauf bei bekannten Flächen ab:

Bereits für Werte von x ≧ 12 mm, auf dem größten Teil der Fläche jedoch bereits bei Werten von x > 6 mm wird der Krümmungsradius der Schnittlinien von horizontalen Ebenen (y=const.) mit der progressiven Fläche mit zunehmendem Abstand vom Hauptmeridian (x=0) größer, bei bekannten Flächen wird dagegen der Krümmungsradius bis zu Werten von wenigstens x = 14-16mm kleiner !

Insbesondere ist auf dem größten Teil der Fläche bei Werten von x ≧ 6 mm, in jedem Falle aber bei Werten von x ≅ 14 mm der Krümmungsradius der Schnittlinie größer als der Krümmungsradius dieser Schnittlinie bei x = 0mm.

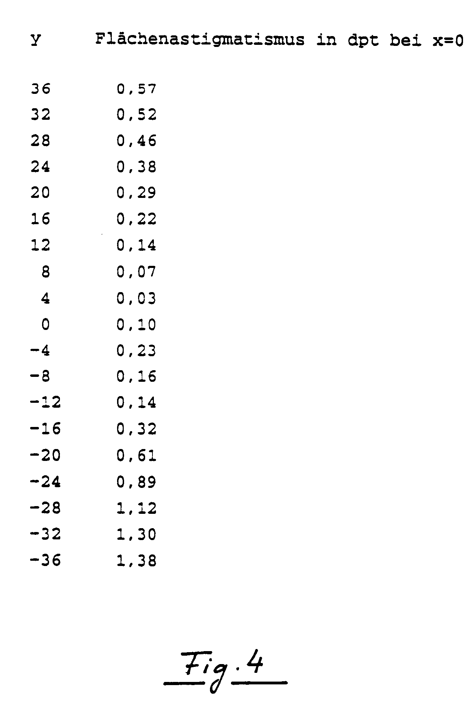

Fig. 4 zeigt tabellarisch den Verlauf des Flächenastigmatismus längs des Hauptmeridians x = 0. Wie man Fig. 3 entnehmen kann, erreicht der Flächenastigmatismus auf dem Hauptmeridian im Fernteil FT Werte von 0,5 dpt und im Nahteil sogar Werte mehr als 1,0 dpt.

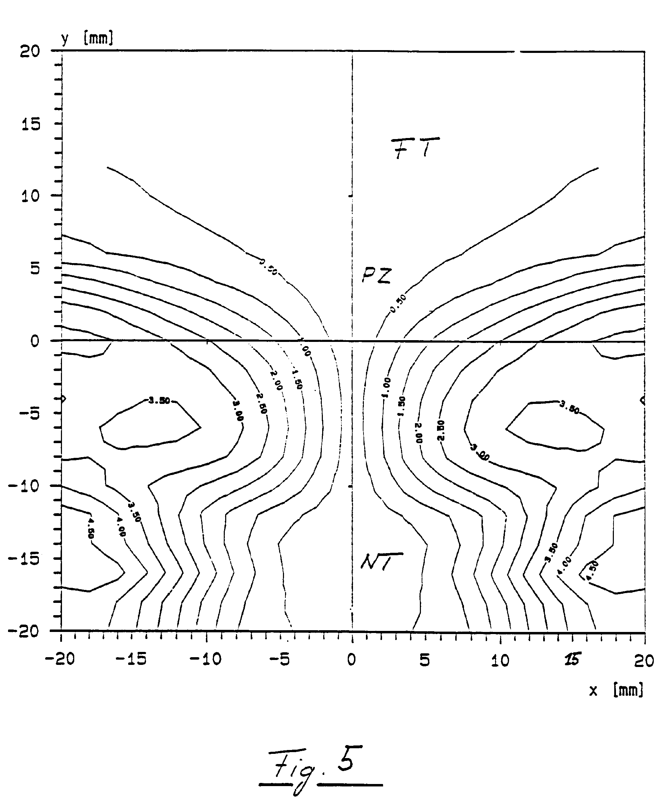

Dennoch ist - wie Fig. 5 zeigt, in der Linien gleichen Astigmatismus als Funktion der Koordinaten x und y aufgetragen sind - der Gesamt-Astigmatismus im Gebrauchsstellung, der sich durch die "Addition" des Flächenastigmatismus und des Astigmatismus schiefer Bündel ergibt, sehr klein. Besonders hervorzuheben ist der breite Bereich im Fernteil und der breite Nahteil, der von den Linien mit einen Astigmatismus von 0,5 dpt. begrenzt wird.

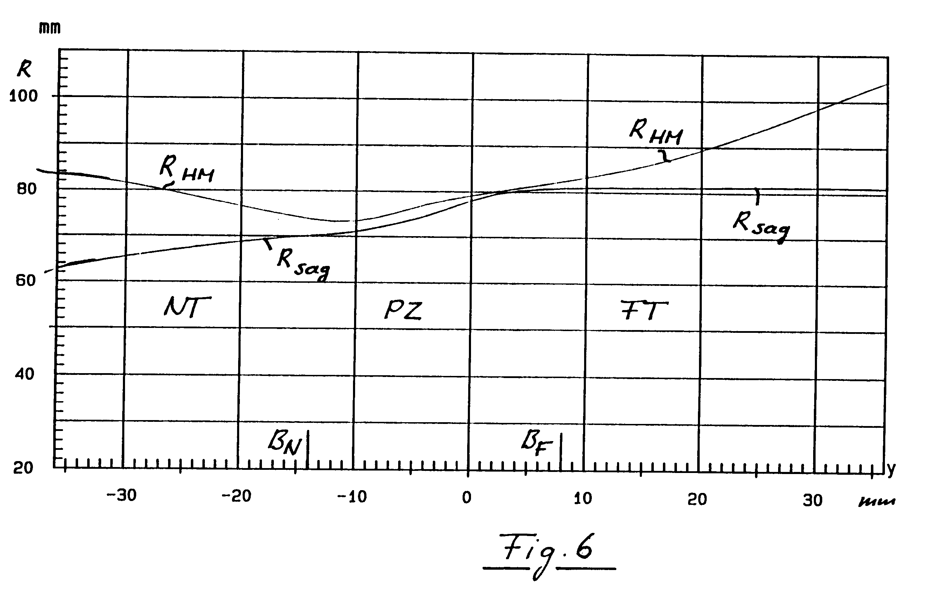

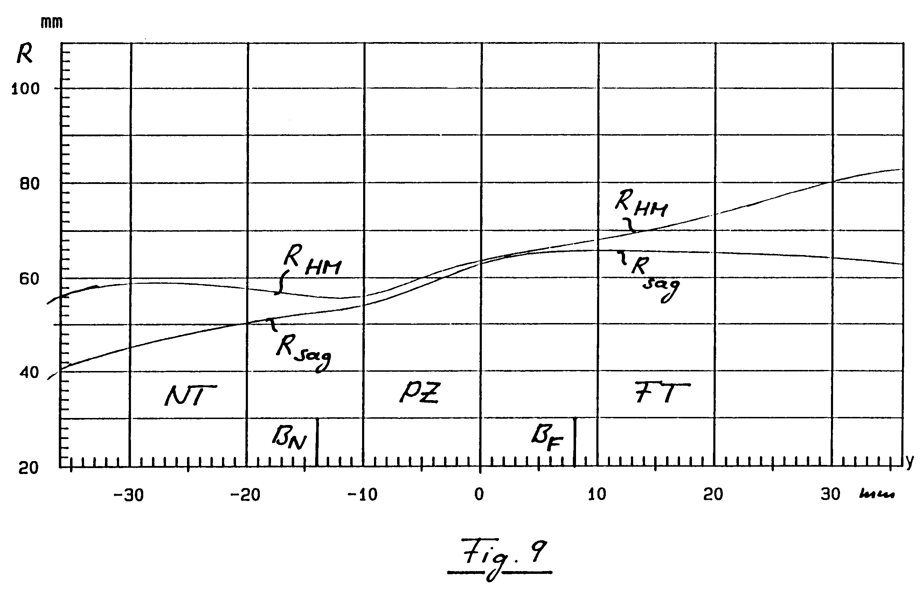

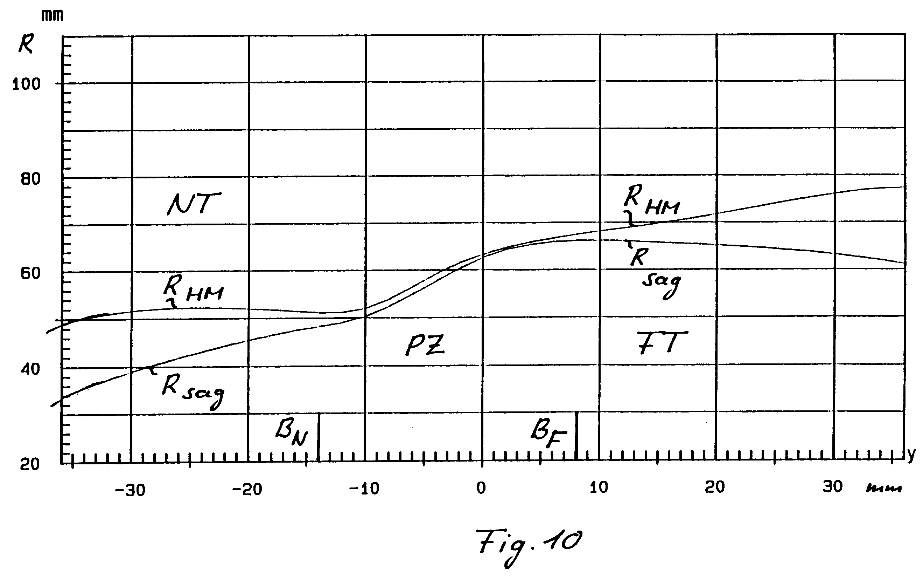

Die Figuren 6 bis 10 zeigen zur weiteren Erläuterung der Erfindung den Verlauf des tangentialen Krümmungsradius $R_{HM}$ und des sagittalen Krümmungsradius $R_{sag}$ längs des Hauptmeridians (x = 0) für weitere Ausführungsbeispiele mit abweichender Basiskurve bzw. abweichender Addition. Bei sämtlichen Beispielen ist der Brechungsindex $n_e$ = 1,604. Dies bedeutet jedoch nicht, daß die Erfindung auf derartige Werte des Brechungsindex beschrankt wäre; vielmehr können erfindungsgemäß ausgebildete Flachen auch für Brillengläser mit abweichendem Brechungsindex, wie beispielsweise 1,7 oder 1,5 (CR 39) bzw. 1,525 (herkömmliche Silikatgläser) verwendet werden.

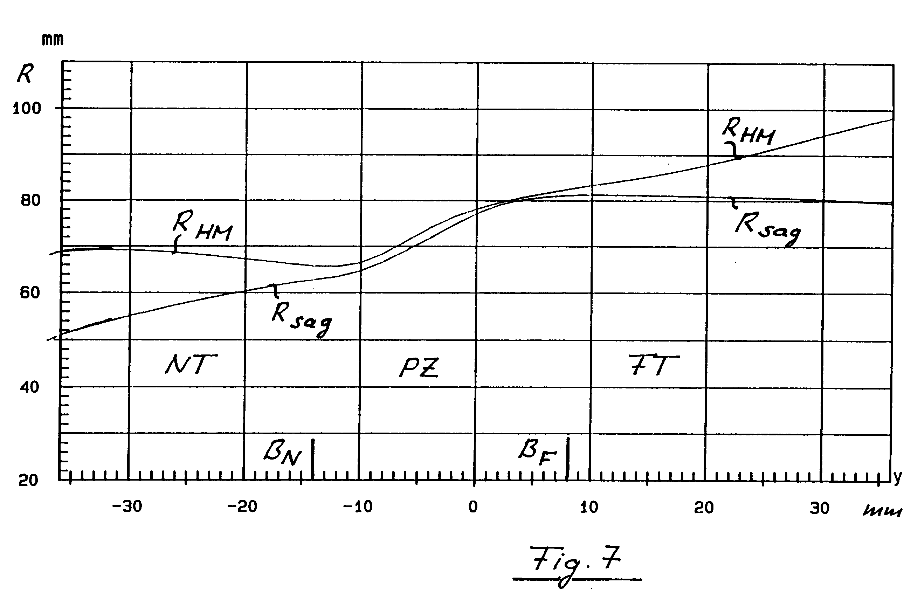

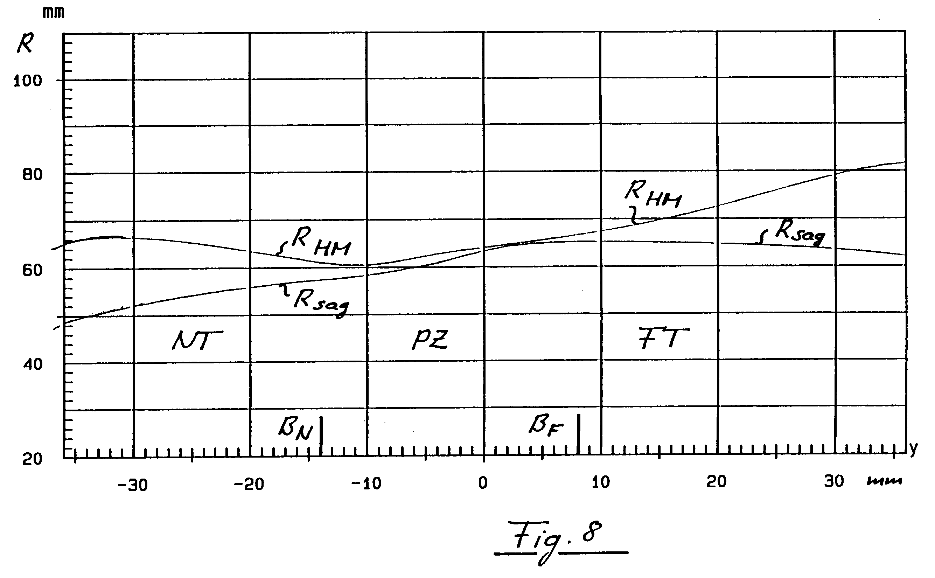

Insbesondere sind in den Fig. 6 und 7 die Verläufe der Krümmungsradien für die Basiskurve 6 und die Addition 1 dpt und 2 dpt, und in den Fig. 8 bis 10 fur die Basiskurve 8 und die Additionen 1 dpt, 2 dpt und 3 dpt dargestellt. Mit Basiskurve 8 ist gemeint, daß mit einer derartigen progressiven Fläche und augenseitigen Flächen mit einer Wirkung zwischen ca. -2,15 dpt und - 4,38 dpt der Bereich bis zu einer Fernteilwirkung von ca. 8 dpt abgedeckt wird.

Wie den Figur 6 und 7 zu entnehmen ist, weisen die Flächen mit geringerer Addition als die in Fig. 2 dargestellte Fläche einen ähnlichen Verlauf des tangentialen Krümmungsradius im Fernteil sowie des sagittalen Krümmungsradius im Fern- und Nahteil auf. Eine Abweichung tritt lediglich beim Verlauf des tangentialen Krümmungsradius $R_{HM}$ im Nahteil auf, der mit abnehmender Addition unterhalb des Nahbezugspunktes ausgeprägter zunimmt.

Dies gilt auch für die in den Fig. 8 bis 10 dargestellten Flächen der Basiskurve 8. Bei diesen Flächen zeigt lediglich der Verlauf des sagittalen Krümmungsradius im Fernteil eine geringfügige Abweichung gegenuber den entsprechenden Flächen gleicher Addition der Basiskurve 6: Der sagittale Krümmungsradius nimmt mit zunehmenden Abstand von Fernbezugspunkt $B_F$ ausgeprägter ab als bei den Flächen der Basiskurve 6.

Insbesondere ist den Fig. 2 und 6 bis 10 zu entnehmen, daß für die Krümmungsradien $R_{HM}$ und $R_{sag}$ der progressiven Fläche in Punkten auf dem Hauptmeridian folgende Beziehungen gelten:

$$R_{HM} (y_{BF} + 15) - R_{HM} (y_{BF}) = B * (R_{HM} (y_{BF}) - R_{HM} (y_{BN}))$$
$$R_{sag}(y_{BN}) - R_{sag}(y_{BN} - 15) = C * (R_{sag}(y_{BF}) - R_{sag}(y_{BN}))$$

wobei für die Faktoren B und C bei der Basiskurve 6 gilt:

$$B \approx 0,17.. 1 \text{ und } C \approx 0,37 \pm 0,05$$

und bei der Basiskurve 8:

$$B \approx 0,45.. 1,25 \text{ und } C \approx 0,54 \pm 0,1$$

Vorstehend ist die Erfindung anhand von Ausführungsbeispielen ohne Beschränkung des allgemeinen Erfindungsgedankens beschrieben worden.

## Patentansprüche

1. Progressives Brillenglas mit positiver Fernteil-Wirkung, bei dem wenigstens eine Fläche progressiv ausgebildet ist, wobei die Fläche einen zum Sehen in die Ferne bestimmten Fernteil (FT) mit annähernd konstanter Fernteil-Wirkung und einen zum Sehen in die Nähe bestimmten Nahteil (NT) mit annähernd konstanter Nahteil-Wirkung sowie eine Progressionszone (PZ) aufweist, in der der Flächen-Brechwert von dem im Fernbezugspunkt ($B_F$) vorliegenden Flächen-Brechwert ($D_F$) längs eines gewundenen oder ebenen Hauptmeridians (HM) auf den in einem ($B_N$) vorliegenden Flächen-Brechwert ($D_N$) ansteigt, mit folgenden Merkmalen:

   - im unteren Bereich der Progressionszone und im Nahteil wird der Krümmungsradius der Schnittlinien von horizontalen Ebenen (y=const) mit der progressiven Fläche wenigstens innerhalb eines sich beidseits des Hauptmeridians (HM) erstreckenden Streifens mit zunehmenden Abstand vom Hauptmeridian (HM),
     -- größer, wenn die progressive Fläche die konvexe Vorderfläche ist, bzw.
     -- kleiner, wenn die progressive Fläche die konkave augenseitige Fläche ist,

- im Fernteil wird der Krümmungsradius in Richtung des Hauptmeridians mit zunehmendem Abstand vom Fernbezugspunkt größer,
- zur Reduktion der Dicke des Brillenglases ist ein vertikales Prisma mit einer Größe von ca 0,25 cm/m bis ca. 3,00 cm/m vorgesehen, das eine untenliegende Basis aufweist, so daß die optische Achse in Richtung auf den Nahteil (NT) verschoben ist,
- zur Kompensation des Astigmatimus schiefer Bündel weist die progressive Fläche wenigstens im oberen Bereich des Fernteils und im unteren Bereich des Nahteils einen Flächenastigmatismus auf, wobei für den Krümmungsradius $R_{HM}$ der progressiven Fläche längs des Hauptmeridians (HM) und den Krümmungsradius $R_{sag}$ senkrecht zum Hauptmeridian folgende Beziehungen gelten, wenn die progressive Fläche die Vorderfläche ist:

$$R_{HM} (y_{BN} - 15 < y < y_{BN}) \geqq R_{HM} (y = y_{BN})$$
$$R_{sag}(y < y_{BN}) < R_{sag}(y = y_{BN}) < R_{HM} (y = y_{BN})$$
$$|dR_{sag}/dl| \approx const > 0 \text{ für } y < y_{BN}$$

die augenseitige Fläche ist:

$$R_{HM} (y_{BN} - 15 < y < y_{BN}) \leqq R_{HM} (y = y_{BN})$$
$$R_{sag}(y < y_{BN}) > R_{sag}(y = y_{BN}) > R_{HM} (y = y_{BN})$$
$$|dR_{sag}/dl| \approx const > 0 \text{ für } y < y_{BN}$$

hierbei ist $|dR_{sag}/dl|$ die Änderung des Krümmungsradius genkrecht zum Hauptmeridian in Punkten auf dem Hauptmeridian und $y_{BN}$ die y-Koordinate des Nahbezugspunktes.

2. Brillenglas nach Anspruch 1,
wobei für die Krümmungsradien $R_{HM}$ und $R_{sag}$ der progressiven Fläche in Punkten auf dem Hauptmeridian folgende Beziehungen gelten, wenn die progressive Fläche die Vorderfläche ist:

$$R_{HM} (y_{BF} + 15) - R_{HM} (y_{BF}) = B * (R_{HM} ( y_{BF}) - R_{HM} (y_{BN}))$$
$$R_{sag}(y_{BN}) - R_{sag}(y_{BN} - 15) = C * (R_{sag}(y_{BF}) - R_{sag}(y_{BN}))$$

wobei die Faktoren B und C für augenseitige Flächen zwischen ca -1,5 dpt und -3,5 dpt bei der Basiskurve 6 dpt und ca -2,15 dpt und -4,5 dpt bei der Basiskurve 8 dpt in folgenden Bereichen liegen:

```
B                C                Addition = D_N-D_F
0,8...1,3        0,25...0,8       0,5...1,0
0,3...0,8        0,25...0,8       1.25..2,0
0,1...0,8        0,25...0,8       2.25..3,5
```

3. Brillenglas nach Anspruch 1 oder 2,
wobei der Krümmungsradius $R_{sag}$, d.h. der senkrecht zum Hauptmeridian verlaufende Krümmungsradius im Fernteil zumindest annähernd konstant ist.

4. Brillenglas nach einem der Ansprüche 1 bis 3,
wobei für den in Richtung des Hauptmeridians verlaufenden Krümmungsradius $R_{HM}$ im Fernteil gilt:

$$dR_{HM}/dl \approx const > 0 \text{ für } y > y_{BF}$$

5. Brillenglas nach einem der Ansprüche 1 bis 5,
wobei im oberen Bereich der Progressionszone und im Fernteil der Krümmungsradius der Schnittlinien von horizontalen Ebenen (y=const) mit der progressiven Fläche zumindest außerhalb eines sich beidseits des Hauptmeridians (HM) erstreckenden und höchstens 16 mm breiten Streifens mit zunehmenden Abstand vom Hauptmeridian (HM)
größer wird, wenn die progressive Fläche die konvexe Vorderfläche ist, bzw.
kleiner wird, wenn die progressive Fläche die konkave augenseitige Fläche ist.

6. Brillenglas nach Anspruch 5,
wobei zumindest außerhalb eines sich beidseits des Hauptmeridians erstreckenden und höchstens 20 mm breiten Streifens gilt:

$$R_{sag}(x, y = const) > R_{sag}(x = HM, y = const)$$

hierbei ist $R_{sag}(x,y)$ der Krümmungsradius der Schnittlinien von zum Hauptmeridian senkrechten Ebenen mit der progressiven Fläche.

7. Brillenglas nach einem der Ansprüche 1 bis 6, wobei längs des gesamten Hauptmeridians gilt:

$$R_{HM}(x_{HM}, y_{HM}) \cong R_{sag}(x_{HM}, y_{HM})$$

hierbei ist

$R_{HM}$      der Krümmungsradius längs des Hauptmeridians im Punkt $x_{HM}$, $y_{HM}$ auf dem Hauptmeridian,

$R_{sag}$      der Krümmungsradius einer Schnittlinie der progressiven Fläche mit einer zum Hauptmeridian senkrechten Ebeneim Punkt $x_{HM}$, $Y_{HM}$ auf dem Hauptmeridian.

8. Brillenglas nach einem der Ansprüche 1 bis 7, wobei der Flächenastigmatismus auf dem Hauptmeridian im oberen Teil des Fernteils und im unteren Teil des Nahteils jeweils Werte von 0,3 dpt überübersteigt.

9. Brillenglas nach Anspruch 8, wobei der Flächenastignatimus auf dem Hauptmeridian im Fernteil Werte von 0,5 dpt und im Nahteil von 1,0 dpt und darüber erreicht.

10. Brillenglas nach einem der Ansprüche 1 bis 9, wobei auf dem gesamten Hauptmeridian der Flächenastigmatismus ungleich Null ist.

## Claims

1. Progressive spectacle lens with a positive distance portion power in which at least one surface is designed in a progressive manner wherein the surface has a distance portion (FT) designed for vision at a distance with an approximately constant distance portion power and a near portion (NT) designed for near vision with an approximately constant near portion power and a progressive corridor (PZ) in which the surface focal power increases from the surface focal power ($D_F$) in effect at the distance reference point ($B_F$) along a twisted or flat main meridian (HM) to the surface focal power ($D_N$) in effect at the near reference point ($D_N$), with the following characteristics:

    - in the lower area of the progressive corridor and in the near portion the radius of curvature of the lines of intersection of horizontal planes (y=const) with the progressive surface becomes with increasing distance from the main meridian (HM) at least within a strip located to both sides of the main meridian

      -- larger if the progressive surface is the convex front surface or

      -- smaller if the progressive surface is the concave back surface.

    - in the distance portion the radius of curvature becomes larger in the direction of the main meridian as the distance from the distance reference point increase.

    - to reduce the thickness of the spectacle lens, a vertical prism with a power of approx. 0.25 A up to 3.00 A is provided with its base down, so that the optical axis is moved in the direction of the near portion (NT),

    - to compensate for oblique astigmatism, the progressive surface has surface astigmatism at least in the upper area of the distance portion and in the lower area of the near portion where the following relationships apply to the radius of curvature $R_{HM}$ of the progressive surface along the main meridian (HM) and to the radius of curvature $R_{sag}$ perpendicular to the main meridian if the progressive surface is:

    the front surface:

$$R_{HM} (y_{BN} - 15 < y < y_{BN}) \cong R_{HM} (y = y_{BN})$$
$$R_{sag}(y < y_{BN}) < R_{sag}(y = y_{BN}) < R_{HM} (y = y_{BN})$$
$$|dR_{sag}/dl| \approx \text{const} > 0 \text{ for } y < y_{BN}$$

    the back surface:

$$R_{HM} (y_{BN} - 15 < y < y_{BN}) \cong R_{HM} (y = y_{BN})$$
$$R_{sag}(y < y_{BN}) > R_{sag}(y = y_{BN}) > R_{HM} (y = y_{BN})$$
$$|dR_{sag}/dl| \approx \text{const} > 0 \text{ for } y < y_{BN}$$

    where $|dR_{sag}/dl|$ is the change in the radius of curvature perpendicular to the main meridian at points on the main meridian and $y_{BN}$ is the y coordinate of the near reference point.

2. Spectacle lens according to claim 1, wherein the following relationships apply to the radii of curvature $R_{HM}$ and $R_{sag}$ of the progressive surface at points on the main meridian when the progressive surface is the

front surface:

$$R_{HM}(y_{BF} + 15) - R_{HM}(y_{BF}) = B * (R_{HM}(y_{BF}) - R_{HM}(y_{BN}))$$
$$R_{sag}(y_{BN}) - R_{sag}(y_{BN} - 15) = C * (R_{sag}(y_{BF}) - R_{sag}(y_{BN}))$$

where the factors B and C for back surfaces between approx. 1.5 D and -3.5 D for base curve 6 D and approx. -2.15 D and 4.5 D for base curve 8 D lie in the following ranges:

| B | C | Addition = $D_N - D_F$ |
|---|---|---|
| 0.8...1.3 | 0.25...0.8 | 0.5 ... 1.0 |
| 0.3...0.8 | 0.25...0.8 | 1.25..2.0 |
| 0.1...0.8 | 0.25...0.8 | 2.25..3.5 |

3. Spectacle lens according to claim 1 or 2. wherein the radius of curvature $R_{sag}$. i.e. the radius of curvature running perpendicular to the main meridian is at least approximateiy constant in the distance portion.

4. Spectacle lens according to any of claims 1 to 3, wherein
$dR_{HM}/dl \approx const > 0$ for $y > y_{BF}$ applies to the radius of curvature $R_{HM}$ in the distance portion running in the direction of the main meridian.

5. Spectacle lens according to any of claims 1 to 5, wherein in the upper area of the progressive corridor and in the distance portion the radius of curvature of the lines of intersection of horizontal planes (y=const) with the progressive surface at least outside a strip on both sides of the main meridian (HM) and at most 16 mm wide becomes larger when the progressive surface is the convex front surface or becomes smaller if the progressive surface is the concave back surface with increasing distance from the main meridian (HM).

6. Spectacle lens according to claim 5, wherein at least outside a strip on both sides of the main meridian and at most 20 mm wide
$$R_{sag}(x, y = const) > R_{sag}(x = HM, y = const)$$
applies,
where $R_{sag}(x,y)$ is the radius of curvature of the lines of intersection with the progressive surface of planes perpendicular to the main meridian.

7. Spectacle lens according to any of claims 1 to 6, wherein
$$R_{HM}(x_{HM}, y_{HM}) \cong R_{sag}(x_{HM}, y_{HM})$$
applies along the whole of the main meridian.
where
$R_{HM}$      is the radius of curvature along the main meridian at the point $x_{HM}$, $y_{HM}$ on the main meridian,
$R_{sag}$      is the radius of curvature of a line of intersection of the progressive surface with a plane perpendicular to the main meridian at the point $x_{HM}$, $y_{HM}$ on the main meridian.

8. Spectacie lens according to any of claims 1 to 7, wherein the surface astigmatism on the main meridian in the upper part of the distance portion and in the lower part of the near portion exceeds values of 0.3 D in each case.

9. Spectacle lens according to ciaim 8, wherein the surface astigmatism on the main meridian in the distance portion reaches values of 0.5 D and in the near portion of 1.0 D and more.

10. Spectacle lens according to any of claims 1 to 9, wherein the surface astigmatism is not equal to zero on the whole of the main meridian.

**Revendications**

1. Verre de lunettes progressif à effet positif dans la partie éloignée, dans lequel une surface au moins est constituée de façon progressive, la surface comprenant une partie éloignée (FT) destinée à la vision de loin et dont l'effet dans la partie éloignée est approximativement constant et une partie rapprochée (NT) destinée à la vision de près dont l'effet dans la partie rapprochée est approximativement constant, ainsi qu'une zone de progression (PZ) dans laquelle la puissance de surface augmente depuis la puissance de surface ($D_F$) présente au point de référence éloigné ($B_F$) le long d'un méridien principal sinueux ou plan (HM) jusqu'à la puissance de surface ($D_N$) présente au point de référence rapproché ($B_N$),

caractérisé en ce que

- dans la région inférieure de la zone de progression et dans la partie rapprochée, le rayon de courbure des lignes de coupe de plans horizontaux (y = const.) avec la surface progressive au moins à l'intérieur d'une bande s'étendant de chaque côté du méridien principal (HM) et dont la distance augmente par rapport au méridien principal (HM),

-- augmente quand la surface progressive est la surface convexe avant, ou

-- diminue quand la surface progressive est la surface concave située du côté de l'oeil,

- le rayon de courbure dans la partie éloignée augmente en direction du méridien principal à mesure qu'augmente la distance du point de référence éloigné,

- un prisme vertical d'une dimension comprise entre environ 0,25 cm/m et environ 3 cm/m est prévu pour réduire l'épaisseur du verre de lunettes, prisme qui comprend une base sous-jacente de manière que l'axe optique soit décalé en direction de la partie rapprochée (NT),

la surface progressive comprend en vue de la compensation de l'astigmatisme des faisceaux obliques un astigmatisme de surface au moins dans la région supérieure de la partie éloignée et dans la région inférieure de la partie rapprochée, les relations suivantes étant valables pour le rayon de courbure $R_{HM}$ de la surface progressive le long du méridien principal (HM) et le rayon de courbure $R_{sag}$ perpendiculairement au méridien principal

$$R_{HM} (y_{BN}^{-15} < y < y_{BN}) \geqq R_{HM} (y = Y_{BN})$$
$$R_{sag}(y < y_{BN}) < R_{sag}(y = y_{BN}) < R_{HM} (y = y_{BN})$$
$$|dR_{sag}/dl| = const. < 0 \text{ pour } y < y_{BN}$$

quand la surface progressive est la surface avant, et

$$R_{HM} (y_{BN}^{-15} < y < y_{BN}) \leqq R_{HM} (y = Y_{BN})$$
$$R_{sag}(y < y_{BN}) > R_{sag}(y = y_{BN}) > R_{HM} (y = y_{BN})$$
$$|dR_{sag}/dl| = const. > 0 \text{ pour } y < y_{BN}$$

quand la surface progressive est la surface située du côté de l'oeil,

$|dR_{sag}/dl|$ représentant la modification du rayon de courbure perpendiculairement au plan principal en des points du méridien principal et $y_{BN}$ la coordonnée y du point de référence rapproché.

2. Verre de lunettes selon la revendication 1, caractérisé en ce que les relations suivantes s'appliquent pour les rayons de courbure $R_{HM}$ et $R_{sag}$ de la surface progressive en des points sur le méridien principal quand la surface progressive constitue la surface avant:

$$R_{HM} (y_{BF}^{+15}) - R_{HM} (y_{BF}) = B * (R_{HM} ( y_{BF}) - R_{HM} (y_{BN}))$$
$$R_{sag}(y_{BN}) - R_{sag}(y_{BN}^{-15}) = C * (R_{sag}(y_{BF}) - R_{sag}(y_{BN}))$$

les facteurs B et C étant situés pour des surfaces disposées du côté de l'oeil entre environ -1,5 dpt et -3,5 dpt pour la courbe de base de 6 dpt et entre environ -2,15 dpt et -4,5 dpt pour la courbe de base de 8 dpt dans les régions suivantes:

```
B            C              Addition = D_N-D_F
0,8...1,3    0,25...0,8     0,5...1,0
0,3...0,8    0,25...0,8     1,25..2,0
0,1...0,8    0,25...0,8     2,25..3,5
```

3. Verre de lunettes selon la revendication 1 ou 2, caractérisé en ce que le rayon de courbure $R_{sag}$, c'est-à-dire le rayon de courbure qui est perpendiculaire au méridien principal, est au moins approximativement constant dans la partie éloignée.

4. Verre de lunettes selon l'une des revendications 1 à 3, caractérisé en ce que la relation suivante au moins s'applique pour le rayon de courbure $R_{HM}$ s'étendant dans la direction du méridien principal dans la partie éloignée:

$$dR_{HM}/dl = const. > 0 \text{ pour } y > y_{BF}$$

5. Verre de lunettes selon l'une des revendications 1 à 4, caractérisé en ce que dans la région supérieure de la zone de progression et dans la partie éloignée, le rayon de courbure des lignes de coupe de plans horizontaux (y = const.) avec la surface progressive, au moins à l'extérieur d'une bande d'une largeur de 16 mm au maximum et s'étendant de chaque côté du méridien principal (HM)

augmente quand la surface progressive est la surface convexe avant, ou

diminue quand la surface progressive est la surface concave située du côté de l'oeil.

6. Verre de lunettes selon la revendication 5, caractérisé en ce que la relation suivante s'applique au moins à l'extérieur d'une bande d'une largeur de 20 mm au maximum et s'étendant de chaque côté du méridien principal:

$$R_{sag}(x, y = \text{const.}) > R_{sag}(x = HM, y = \text{const.})$$

où $R_{sag}(x, y)$ représente le rayon de courbure des lignes de coupe de plans perpendiculaires au méridien principal avec la surface progressive.

7. Verre de lunettes selon l'une des revendications 1 à 6, caractérisé en ce la relation suivante s'applique le long d e l'ensemble du méridien principal:

$$R_{HM}(x_{HM}, y_{HM}) \cong R_{sag}(x_{HM}, y_{HM})$$

où $R_{HM}$ représente le rayon de courbure le long du méridien principal au point $x_{HM}$, $y_{HM}$ sur ce méridien, et $R_{sag}$ représente le rayon de courbure d'une ligne de coupe de la surface progressive avec un plan perpendiculaire au méridien principal au point $x_{HM}$, $y_{HM}$ sur ce méridien.

8. Verre de lunettes selon l'une des revendications 1 à 7, caractérisé en ce que l'astigmatisme de surface sur le méridien principal dans la région supérieure de la partie éloignée et dans la région inférieure de la partie rapprochée dépasse respectivement des valeurs de 0,3 dpt.

9. Verre de lunettes selon la revendication 8, caractérisé en ce que l'astigmatisme de surface sur le méridien principal atteint dans la partie éloignée des valeurs de 0,5 dpt et dans la partie rapprochée des valeurs de 1,0 dpt et plus.

10. Verre de lunettes selon l'une quelconque des revendications 1 à 9, caractérisé en ce que l'astigmatisme de surface sur la totalité du méridien principal n'est pas nul.

EP 0 437 607 B1

Fig. 1

_Fig. 2_

EP 0 437 607 B1

| x -> | 0 | 4 | 8 | 12 | 16 | 24 | 36 |
|---|---|---|---|---|---|---|---|
| y | | | | | | | |
| 36 | 78,41 | 78,40 | 78,81 | 80,20 | 82,20 | | |
| 28 | 79,97 | 79,82 | 79,90 | 81,03 | 83,04 | 86,04 | |
| 24 | 80,51 | 80,28 | 80,20 | 81,23 | 83,27 | 86,57 | 93,10 |
| 20 | 80,94 | 80,61 | 80,34 | 81,28 | 83,43 | 86,93 | 94,46 |
| 16 | 81,27 | 80,82 | 80,34 | 81,23 | 83,51 | 87,14 | 95,45 |
| 12 | 81,66 | 81,03 | 80,25 | 80,99 | 83,39 | 87,11 | 96,33 |
| 8 | 81,65 | 80,88 | 79,89 | 80,70 | 83,40 | 87,10 | 96,55 |
| 4 | 80,33 | 79,66 | 79,03 | 80,63 | 84,38 | 87,90 | 94,88 |
| 0 | 76,40 | 76,22 | 76,96 | 80,78 | 86,98 | 89,43 | 89,40 |
| -4 | 69,39 | 70,10 | 73,61 | 82,06 | 93,52 | 91,52 | 79,21 |
| -8 | 62,14 | 63,76 | 70,21 | 84,57 | 103,71 | 91,89 | 68,90 |
| -12 | 57,80 | 59,69 | 66,90 | 82,96 | 106,10 | 93,85 | 62,70 |
| -16 | 56,05 | 57,72 | 63,95 | 77,66 | 98,30 | 94,54 | 60,04 |
| -20 | 53,86 | 55,48 | 61,63 | 75,31 | 95,63 | 88,28 | 56,25 |
| -24 | 51,44 | 53,09 | 59,55 | 74,27 | 94,76 | 78,26 | 52,32 |
| -28 | 48,81 | 50,50 | 57,49 | 73,77 | 93,64 | 67,17 | |
| -36 | 42,69 | 44,53 | 53,22 | 73,67 | 83,76 | | |

(Die Daten sind auf 2 Stellen gerundet)

Fig. 3

15

| y | Flächenastigmatismus in dpt bei x=0 |
|---|---|
| 36 | 0,57 |
| 32 | 0,52 |
| 28 | 0,46 |
| 24 | 0,38 |
| 20 | 0,29 |
| 16 | 0,22 |
| 12 | 0,14 |
| 8 | 0,07 |
| 4 | 0,03 |
| 0 | 0,10 |
| -4 | 0,23 |
| -8 | 0,16 |
| -12 | 0,14 |
| -16 | 0,32 |
| -20 | 0,61 |
| -24 | 0,89 |
| -28 | 1,12 |
| -32 | 1,30 |
| -36 | 1,38 |

*Fig.4*

_Fig. 5_

Fig.6

Fig. 7

EP 0 437 607 B1

Fig. 8

EP 0 437 607 B1

Fig. 9

Fig. 10